# EUROPÄISCHE PATENTSCHRIFT

(11) **EP 3 385 138 B1**
(45) Veröffentlichungstag und Bekanntmachung des Hinweises auf die Patenterteilung: **04.08.2021**
(21) Anmeldenummer: 18164951.8
(22) Anmeldetag: 29.03.2018
(51) Int. Cl.: B60K 35/00, B60W 50/08, B60W 50/10, B60W 30/16, B60W 30/18, B60W 30/12, B60W 50/14

(54) **VORRICHTUNG ZUR KONFIGURATION EINES FAHRERASSISTENZSYSTEMS**
CONFIGURATION DEVICE FOR A DRIVER ASSISTANCE SYSTEM
DISPOSITIF DE CONFIGURATION D'UN SYSTÈME D'AIDE À LA CONDUITE

(30) Priorität: 06.04.2017 DE 102017003335
(43) Veröffentlichungstag der Anmeldung: 10.10.2018
(73) Patentinhaber: MAN Truck & Bus SE, 80995 München (DE)
(72) Erfinder: Wölfel, Christiane, 80337 München (DE); Mohra, Holger, 80805 München (DE); Arnold, Claus, 93161 Sinzing (DE); Zademach, Martin, 85232 Bergkirchen (DE); Güllich, Johannes, 85229 Markt Indersdorf (DE)
(74) Vertreter: v. Bezold & Partner Patentanwälte - PartG mbB

(56) Entgegenhaltungen:
- EP-A1- 3 090 913
- DE-A1-102010 052 293
- DE-A1-102015 003 348
- US-A1- 2014 249 722
- Bayerische Motoren Werke: "Owner's Manual for Vehicle The Ultimate Driving Machine Contents", , 1 June 2016 (2016-06-01), XP055617435, Retrieved from the Internet: URL:https://cdn.dealereprocess.org/cdn/ser vicemanuals/bmw/2016-5series.pdf [retrieved on 2019-09-02]
- Jaguar: "Automatic transmission - JaguarDrive selector", , 23 August 2014 (2014-08-23), XP055617439, Retrieved from the Internet: URL:https://topix.jaguar.jlrext.com/topix/ service/archive/70720/transmission.pdf [retrieved on 2019-09-02]

## Beschreibung

Die vorliegende Erfindung betrifft eine Technik zur Konfiguration eines Fahrerassistenzsystems eines Kraftfahrzeugs. Insbesondere sind eine Konfigurationsvorrichtung und ein mit einer solchen Konfigurationsvorrichtung ausgestattetes Kraftfahrzeug beschrieben.

Die Arbeitsaufgaben eines Fahrers eines Kraftfahrzeugs, insbesondere eines Personenkraftwagens (PKW) oder eines Lastkraftwagens (LKW), werden durch zahlreiche Assistenzsysteme, je nach Ausstattung des Fahrzeugs, unterstützt. Assistenzsysteme, wie beispielsweise eine automatische Abstandsregelung, eine Geschwindigkeitsregelung oder ein Spurwechselassistent, werden jedoch herkömmlicherweise separat bedient und einzeln eingestellt.

So müssen herkömmliche Assistenzsysteme über einzelne Tasten oder Menüpunkte angesteuert werden, wodurch die Bedienung erschwert wird. Je mehr solcher Assistenzsysteme entwickelt werden, desto schwieriger werden die Bedienung der Assistenzsysteme und auch die Integration neu hinzukommender Assistenzsysteme in ein bestehendes Bedienungskonzept. Deshalb können viele Assistenzsysteme nur mit wachsendem Mehraufwand nachgerüstet werden.

Das Dokument US 2014/0249722 A1 beschreibt ein Fahrerassistenzsystem mit einem Sensor, der Objekte und/oder Eigenschaften von Objekten in der Umgebung eines Kraftfahrzeugs erkennt, und einer Objekterkennungseinheit, die Daten vom Sensor auswertet, um Objektinformationen zu erzeugen, und die einen Vertrauenswert bestimmt, der die Wahrscheinlichkeit der Genauigkeit derselben anzeigt. Ist der Vertrauenswert größer als ein minimaler Schwellenwert, aber kleiner als ein vordefinierter Schwellenwert, dann zeigt das System die Objektinformationen dem Fahrer an, der sie bestätigt oder ablehnt, z. B. durch Betätigen oder Nichtbetätigen eines Bedienelements. Nach der Bestätigung durch den Fahrer führt das System eine Fahrerassistenzfunktion basierend auf den Objektinformationen durch. Bei Ablehnung durch den Fahrer führt das System die Fahrerassistenzfunktion nicht aus. Überschreitet der Vertrauenswert den vordefinierten Schwellenwert, führt das System die Fahrerassistenzfunktion autonom aus.

Das Dokument DE 10 2010 052 293 A1 betrifft ein Verfahren zum Einstellen eines Fahrerassistenzsystems für Fahrzeuge. Das Fahrerassistenzsystem umfasst mehrere Fahrerassistenzmodule unterschiedlicher Funktionalität, wobei jedes Fahrerassistenzmodul mehrere Teilfunktionen aufweist. Die Teilfunktionen der Fahrerassistenzmodule sind zumindest zwei Funktionsgruppen zugeordnet. Die erste Funktionsgruppe weist weniger Automatisierungsfunktionen und weniger automatische Schutzfunktionen als die zweite Funktionsgruppe auf. Zum Einstellen der Parameter mehrerer Fahrerassistenzmodule des Fahrerassistenzsystems wird ein graphisches Grundelement angezeigt, das mehrere Teilelemente umfasst, wobei sich das graphische Grundelement hinsichtlich der Teilelemente in Abhängigkeit davon unterscheidet, welche Funktionsgruppe aktiviert ist. Die Parameter der Fahrerassistenzmodule werden eingestellt.

Das Dokument EP 3 090 913 A1 sieht ein Fahrzeugsteuerungssystem für ein Fahrzeug vor, das eine Reihe von Fahrerassistenzsystemen umfasst, die eine Reihe von Sensoren umfassen, um Daten über die Umgebung des Fahrzeugs zu erfassen, das eine Benutzeroberfläche umfasst, um Benutzerinformationen anzuzeigen und Benutzereingaben von einem Benutzer zu erfassen, und das eine Verarbeitungseinheit umfasst, die mit den Sensoren und den Fahrerassistenzsystemen und der Benutzeroberfläche gekoppelt ist. Die Verarbeitungseinheit stellt den Fahrerassistenzsystemen angepasste Parameter basierend auf erfassten Benutzereingaben über Sensordaten und von den Fahrerassistenzsystemen durchgeführten Aktionen bereit.

Das Dokument "Owner's Manual for Vehicle - The Ultimate Driving Machine Contents" der Bayerischen Motoren Werke offenbart die Möglichkeit, zwischen verschiedenen Modi eines Kraftfahrzeugs, z. B. verschiedenen Fahrdynamiken ("SPORT", "COMFORT"), zu wählen.

Das Dokument DE 10 2015 003 348 A1 offenbart ein Verfahren zum Betreiben eines Kraftfahrzeugs mit wenigstens einem Sensor zum Erfassen eines Benutzerzustands und/oder wenigstens eines Parameters, aus dem der Benutzerzustand ableitbar ist. Abhängig von einem erfassten Benutzerzustand und/oder einer erfassten Änderung des Benutzerzustands verändert ein Autonomiegrad, der festlegt, zu welchem Anteil eine Funktion und/oder eine Einrichtung des Kraftfahrzeugs automatisch durch eine Steuereinrichtung des Kraftfahrzeugs oder manuell durch einen Benutzer gesteuert wird, wenigstens eine Funktion und/oder wenigstens eine Einrichtung des Kraftfahrzeugs.

Ferner erscheint die Bedienung einzelner Funktionen als eigenständige Assistenzsysteme für den Fahrer schwer verständlich, da beispielsweise die verschiedenen Assistenzsysteme unterschiedliche Bedienlogiken aufweisen. Diese Komplexität der Bedienung nimmt immer weiter zu, je mehr Assistenzsysteme im Fahrzeug eingebaut sind.

Somit besteht die Aufgabe, eine Technik anzugeben, die eine einheitliche Konfiguration eines Fahrerassistenzsystems bei wachsendem Funktionsumfang ermöglicht.

Diese Aufgabe wird durch eine Technik mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt ist eine Vorrichtung zur Konfiguration eines Fahrerassistenzsystems eines Kraftfahrzeugs bereitgestellt. Die Vorrichtung umfasst eine Anzeigeeinheit zur Anzeige eines Parameters des Fahrerassistenzsystems und eine Eingabeeinheit zur Veränderung des angezeigten Parameters. Ferner umfasst die Vorrichtung eine Steuerungseinheit, die dazu ausgebildet ist, abhängig von dem Parameter mehrere funktional verschiedene Regelungen des Fahrerassistenzsystems zu konfigurieren.

Indem ein Parameter die Konfiguration mehrerer funktional verschiedener Regelungen des Fahrerassistenzsystems bestimmt, ist aus Benutzersicht eine zusammenfassende Konfiguration zahlreicher Regelungen in einem übergreifenden Fahrerassistenzsystem erreicht. Die Vorrichtung ermöglicht sowohl dem Fahrer als auch dem Fahrzeughersteller bei der fortschreitenden Ergänzung weiterer Regelungen des Fahrerassistenzsystems, sich in verschiedenen Abstraktionsstufen dem autonomen Fahren zu nähern.

Die Anzeigeeinheit kann ein (beispielsweise frei programmierbares) Kombinationsinstrument und/oder ein Sekundärdisplay umfassen. Die Anzeigeeinheit kann an einer Instrumententafel und/oder im Umfeld eines Fahrerarbeitsplatzes angeordnet sein. Die Anzeigeeinheit kann (in Fahrtrichtung) vor einem Fahrerplatz oder an einer Mittelkonsole angeordnet sein.

Die Eingabeeinheit kann ein Multifunktionslenkrad umfassen. Alternativ oder ergänzend kann die Eingabeeinheit Sensoren zur oberflächlichen oder räumlichen Gestenerkennung umfassen, beispielsweise Elektroden an der Oberfläche eines berührungsempfindlichen Bildschirms der Anzeigeeinheit oder mittels Stereokameras oder elektrischer Felder im Nahfeldbereich (beispielsweise bei einer Trägerfrequenz zwischen 40 kHz und 120 kHz).

Die funktional verschiedenen Regelungen können eine Regelung der Längsdynamik des Kraftfahrzeugs und/oder eine Regelung der Querdynamik des Kraftfahrzeugs umfassen. Jede der funktional verschiedenen Regelungen kann jeweils einen geschlossenen Regelkreis umfassen. Beispielsweise kann eine erste Regelung Abstand und/oder Geschwindigkeit des Kraftfahrzeugs (beispielsweise in Bezug auf ein vorausfahrendes Fahrzeug) regeln. Alternativ oder ergänzend kann die erste Regelung bei Unterschreiten eines Mindestabstands und/oder bei Überschreiten einer Höchstgeschwindigkeit ein Warnsignal ausgeben. Das Warnsignal kann mittels der Anzeigeeinheit angezeigt und/oder in einer Umgebung des Fahrerplatzes akustisch ausgegeben werden. Alternativ oder ergänzend kann eine zweite Regelung Lenkeingriffe ausführen, beispielsweise zur kamerageführten Spureinhaltung.

Der Parameter kann einen Umgebungsbereich relativ zum Kraftfahrzeug bestimmen. Die Eingabe oder Veränderungen des Parameters kann die Aktivierung einzelner oder aller funktional verschiedener Regelungen mit Bezug auf den Umgebungsbereich relativ zum Kraftfahrzeug bestimmen. Erfindungsgemäß bestimmt der Parameter einen Funktionsumfang der funktional verschiedenen Regelungen und/oder den Funktionsumfang für einen bestimmten Umgebungsbereich relativ zum Kraftfahrzeug für die funktional verschiedenen Regelungen. Der Parameter kann ferner einen Übergang zwischen den funktional verschiedenen Regelungen bestimmen.

Die einzelnen Regelungen können ein Fahren des Kraftfahrzeugs durch den Fahrer (zumindest zu großen Teilen) selbst ermöglichen. Durch die Bestimmung des Parameters für den Funktionsumfang der mehreren, funktional verschiedenen Regelungen ist dem Fahrer die Möglichkeit geboten, in verschiedenen Abstraktionsstufen zum autonomen Fahren überzugehen. Damit der Fahrer die Möglichkeit hat, über das Eingreifen der Regelungen vorab zu entscheiden, kann der Fahrer durch die Veränderung des Parameters, die Autonomie des Fahrerassistenzsystems bestimmen.

Durch die Vorrichtung ist eine Zentralisierung der einzelnen Regelungen erreicht, weshalb der Fahrer weniger Einstellungs- und/oder Aktivierungsmöglichkeiten vornehmen muss. Auch ist dadurch der Lernaufwand zur Bedienung des Fahrerassistenzsystems wesentlich verringert.

Durch die Anzeigeeinheit und die Eingabeeinheit ist mittels der Steuerungseinheit dem Fahrer ein kompaktes, zentrales Fahrerassistenzsystem bereitgestellt, dessen Parametrisierungsmöglichkeiten klar angegeben und kategorisiert sind, vorzugsweise ohne Differenzierung hinsichtlich der funktional verschiedenen Regelungen.

Die Steuereinheit kann aufgrund des Parameters die Aktivierung und/oder den Funktionsumfang aller funktional verschiedenen Regelungen konfigurieren, beispielsweise soweit die Regelungen den jeweiligen Umgebungsbereich betreffen.

Mehrere Parameter können jeweils angezeigt und/oder einstellbar sein. Jeder Parameter kann einem von mehreren Umgebungsbereichen relativ zum Kraftfahrzeug zugeordnet sein. Jeder Parameter kann in räumlicher Zuordnung zum zugeordneten Umgebungsbereich angezeigt sein.

Jedem Umgebungsbereich kann mindestens eine der Regelungen zugeordnet sein. Alternativ oder in Kombination können mindestens einer der Regelungen zwei oder mehr Umgebungsbereiche zugeordnet sein.

Die Steuerungseinheit kann in einem ersten Intervall des Parameters eine erste der Regelungen aktivieren. In einem vom ersten Intervall verschiedenen (beispielsweise disjunkten) zweiten Intervall des Parameters kann die Steuerungseinheit eine von der ersten Regelung verschiedene zweite Regelung unter den Regelungen aktivieren.

Die Steuerungseinheit kann das Fahrerassistenzsystem konfigurieren, bei Feststellung einer vorbestimmten Verkehrssituation, falls die erste und die zweite Regelung deaktiviert sind, nur eine Warnung auszugeben, falls die erste Regelung aktiviert ist einzugreifen, und falls die zweite Regelung aktiviert ist, die Verkehrssituation selbstständig aufzulösen.

Gemäß einem weiteren Aspekt ist ein Kraftfahrzeug, insbesondere ein Nutzfahrzeug, bereitgestellt. Das Kraftfahrzeug kann eine Vielzahl an Sensoren zur Überwachung verschiedener Umgebungsbereiche des Kraftfahrzeugs umfassen. Das Kraftfahrzeug kann ferner mehrere funktional verschiedene Regelungen (beispielsweise des Antriebs, der Bremsen und/oder der Lenkung) umfassen. Die funktional verschiedenen Regelungen können Signale von den Sensoren erfassen und verarbeiten.

Das Kraftfahrzeug umfasst eine Vorrichtung zur Konfiguration eines Fahrerassistenzsystems gemäß dem vorgenannten Vorrichtungsaspekt. Hierzu kann die Steuerungseinheit in Signalkommunikation mit den mehreren funktional verschiedenen Regelungen des Kraftfahrzeugs stehen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: schematisch ein exemplarisches Kraftfahrzeug, in dem ein Ausführungsbeispiel der Vorrichtung zur Konfiguration eines Fahrerassistenzsystems realisiert ist;
- Figur 2: schematisch verschiedene Grade der Integration herkömmlicher Regelungen oder Teilassistenzsysteme mittels eines Ausführungsbeispiels der Vorrichtung zur Konfiguration eines Fahrerassistenzsystems;
- Figur 3: schematisch eine Anzeigeeinheit der Vorrichtung gemäß einer ersten Implementierung (nicht erfindungsgemäß);
- Figur 4: schematisch eine Anzeigeeinheit der Vorrichtung gemäß einer zweiten Implementierung (gemäß der Erfindung);
- Figur 5: schematisch eine Anzeigeeinheit der Vorrichtung gemäß einer dritten Implementierung (gemäß der Erfindung); und
- Figur 6: schematisch eine Anzeigeeinheit der Vorrichtung gemäß einer vierten Implementierung (gemäß der Erfindung).

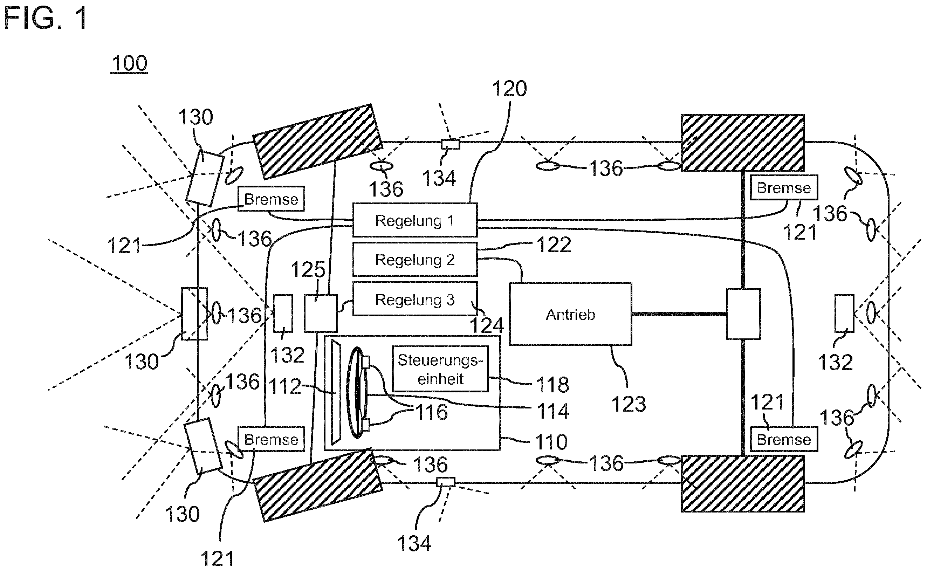

Figur 1 zeigt schematisch ein Ausführungsbeispiel eines allgemein mit Bezugszeichen 100 bezeichneten Kraftfahrzeugs mit Komponenten eines Fahrerassistenzsystems und einer Vorrichtung 110 zur Konfiguration des Fahrerassistenzsystems. Die Vorrichtung 110 umfasst eine Anzeigeeinheit 112 zur Anzeige eines Parameters des Fahrerassistenzsystems und eine Eingabeeinheit 114 zur Veränderung des angezeigten Parameters, beispielsweise Funktionstasten 116 eines Multifunktionslenkrads. Die Vorrichtung 110 umfasst ferner eine Steuerungseinheit 118, die dazu ausgebildet ist, abhängig von dem Parameter mehrere funktional verschiedene Regelungen des Fahrerassistenzsystems zu konfigurieren.

Die Anzeigeeinheit 112 kann mehrere Parameter des Fahrerassistenzsystems anzeigen und die Eingabeeinheit 114 die angezeigten Parameter verändern. Dabei bewirkt die Steuerungseinheit 118 die Konfiguration aller funktional verschiedenen Regelungen des Fahrerassistenzsystems abhängig von jedem der Parameter.

Das Fahrerassistenzsystem des Kraftfahrzeugs 100 umfasst beispielsweise mehrere funktional verschiedene Regelungen zur Längsführung und/oder zur Querführung des Kraftfahrzeugs 100. Beispielsweise umfasst das Fahrerassistenzsystem eine erste Regelung 120, die dazu ausgebildet ist, Eingriffe in das Bremssystem auszuführen, beispielsweise an den Bremsen 121 einzelner Räder zur Fahrzeugstabilisierung. Ferner umfasst das Fahrerassistenzsystem eine zweite Regelung 122, die dazu ausgebildet ist, einen Abstand zum vorausfahrenden Fahrzeug und eine Geschwindigkeit des Kraftfahrzeugs 100 durch Steuerung eines Antriebs 123 des Kraftfahrzeugs 100 zu regeln, beispielsweise in Kombination mit Bremseingriffen. Die zweite Regelung 122 kann eine Längsregelung mit der Funktionalität eines Abstandsregeltempomats umfassen. Eine dritte Regelung 124 des Fahrerassistenzsystems ist zur Querführung des Kraftfahrzeugs 100 einschließlich Steuerung einer Lenkung 125 ausgebildet, beispielsweise als Spurhalteassistent und/oder Spurwechselassistent.

Zur Erfassung der jeweiligen Ist-Größen stehen die Regelungen 120, 122 und 124 in Signalaustausch mit einer Vielzahl von Fahrzeugsensoren. Die Fahrzeugsensoren sind dazu ausgebildet, in verschiedenen Umgebungsbereichen des Kraftfahrzeugs 100 Objekte zu erkennen, beispielsweise deren Größe, deren Abstand und/oder deren Relativgeschwindigkeit zum Kraftfahrzeug 100 zu messen. Beispielsweise umfassen die Fahrzeugsensoren Radarsensoren 130 zur Abstands- und Geschwindigkeitsmessung an einer Fahrzeugfront des Kraftfahrzeugs 100, Stereokameras 132 an der Fahrzeugfront (insbesondere hinter einer Windschutzscheibe) und an der Fahrzeugrückseite, Seitenkameras 134 (beispielsweise an einem Fahrerhausdach und/oder einer B-Säule des Kraftfahrzeugs 100) und/oder Ultraschallsensoren 136 (die beispielsweise umlaufend an einer Außenhaut des Kraftfahrzeugs 100 angeordnet sind).

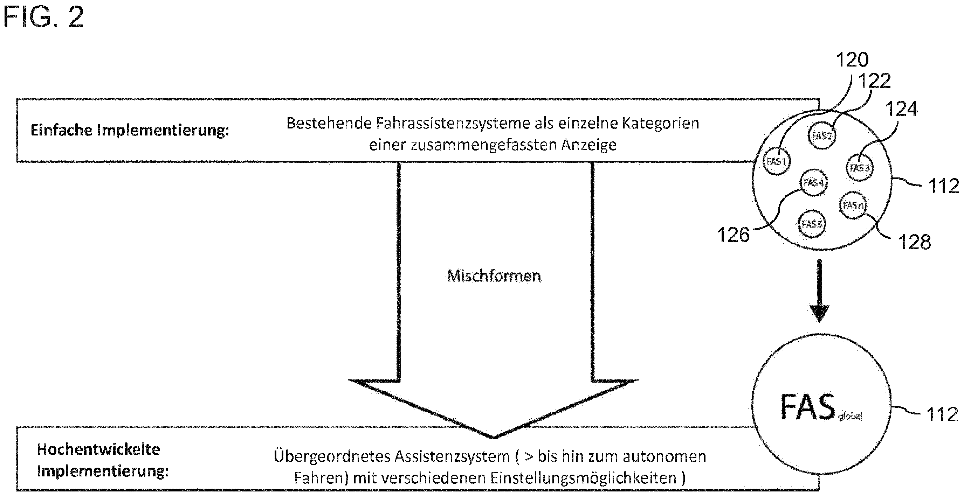

Figur 2 zeigt schematisch unterschiedliche Grade (Integrationsgrade oder Integrationsstufen) einer Integration herkömmlicher Regelungen 120 bis 124 und/oder einer beliebigen Anzahl nachgerüsteter Regelungen 126 und 128 mittels der Vorrichtung 110. Die Vorrichtung 110 bildet mittels der Anzeigeeinheit 112 ein Anzeigesystem eines übergeordneten Fahrerassistenzsystems mit einer entsprechenden, integrierten Bedienung mittels der Eingabeeinheit 114. Grundlage des übergeordneten Fahrerassistenzsystems sind die herkömmlichen Regelungen 120 bis 124 und/oder in Zukunft entwickelte Regelungen 126 und 128.

Die Regelungen 120 bis 128 können jeweils eigenständig bedienbare Teilassistenzsystem umfassen. Die angezeigten Regelungen oder Teilassistenzsysteme werden im Folgenden auch als durchnummerierte Fahrerassistenzsysteme der Form "FAS *i*" bezeichnet. Die Regelungen 120 bis 128 werden funktionell (beispielsweise hinsichtlich einer gemeinschaftlichen Konfiguration der Regelungen) und grafisch mittels der Vorrichtung 110 zu einem globalen Fahrerassistenzsystem zusammengefasst. Die Integration (oder Fusion) dieser Regelungen 120 bis 128 kann in Schritten, beispielsweise je nach Entwicklungsstand oder Fahrzeugausstattung, von der Vereinigung einiger weniger (beispielsweise die Längsführung regelnder) Systeme bis hin zum autonomen Fahren (beispielsweise der Vereinigung aller Regelungen 120 bis 128) erfolgen.

Beispielsweise regelt das Teilassistenzsystem "ACC" die Geschwindigkeit (beispielsweise im Sinne einer eingestellten Geschwindigkeit als Obergrenze der Geschwindigkeitsregelung) und hält dabei den Abstand zum vorausfahrenden Fahrzeug. Das weitere Teilassistenzsystem "Tempomat" hält eine eingestellte Geschwindigkeit (beispielsweise unabhängig vom Abstand zum vorausfahrenden Fahrzeug). Diese beiden Teilassistenzsysteme können zusammengefasst werden (im Sinne der Integration oder Fusion), indem der mittels der Eingabeeinheit 114 eingegebene Parameter einer Sollgröße oder einer Mindestgröße für den Abstand des Teilassistenzsystems "ACC" entspricht. Wird der Parameter durch die Eingabe verkleinert, geht das Fahrerassistenzsystem unterhalb einer vorbestimmten Untergrenze in das Teilassistenzsystem "Tempomat" über.

Alternativ oder ergänzend steuert der Parameter den Übergang vom Teilassistenzsystem "Tempomat" (das beispielsweise die Geschwindigkeit gemäß einer eingestellten Geschwindigkeit als Sollgröße regelt) zum Teilassistenzsystem "Eco-Tempomat". Das Teilassistenzsystem "Eco-Tempomat" regelt die Geschwindigkeit dynamisch (beispielsweise aufgrund topographische Daten zur Minimierung des Kraftstoffverbrauchs) innerhalb von vom Fahrer vorgegebenen Grenzen. Die Grenzen sind durch den Parameter bestimmt und veränderbar. Die Grenzen können eng oder weit gesetzt sein. Werden die Grenzen unter eine Mindestbreite oder auf +/- 0 gesetzt, so entspricht die Funktionalität des Teilassistenzsystems "Eco-Tempomat" der Funktionalität des Teilassistenzsystems "Tempomat", da nur noch die eingestellte Geschwindigkeit gehalten wird.

Alternativ oder ergänzend regelt das Teilassistenzsystem "ACC" die Geschwindigkeit (beispielsweise im Sinne einer eingestellten Geschwindigkeit als Obergrenze der Geschwindigkeitsregelung) und hält dabei den Abstand zum vorausfahrenden Fahrzeug. Das weitere Teilassistenzsystem "Spurwechselassistent" führt Lenkbewegungen aus, die das Kraftfahrzeug 100 auf einer mehrspurigen Fahrbahn von einer Fahrspur (oder einem Fahrsteifen) auf eine andere (beispielsweise benachbarte) Fahrspur führen. Diese beiden Teilassistenzsysteme können zusammengefasst werden (im Sinne der Integration oder Fusion), indem der mittels der Eingabeeinheit 114 eingegebene Parameter einer Sollgröße oder einer Mindestgröße für den Abstand des Teilassistenzsystems "ACC" entspricht. Wird der Parameter durch die Eingabe vergrößert, ermöglicht das Fahrerassistenzsystem oberhalb einer vorbestimmten Obergrenze den automatischen Spurwechsel (beispielsweise ausgeführt in Reaktion auf eine Betätigung des Fahrtrichtungsanzeigers) und/oder das Fahrerassistenzsystem geht oberhalb der vorbestimmten Obergrenze zu automatischen Spurwechseln über.

In einer einfachen Implementierung (nicht erfindungsgemäß) werden bestehende Teilassistenzsysteme als einzelne Kategorien einer zusammengefassten Anzeige mittels der Vorrichtung 110 konfiguriert. In einer hochentwickelten Implementierung der Vorrichtung 110 bildet diese ein übergeordnetes Fahrerassistenzsystem (zum autonomen Fahren) mit verschiedenen Einstellungsmöglichkeiten, die situationsabhängig alle Regelungen 120 bis 128 betrifft. Zwischen der einfachen Implementierung (nicht erfindungsgemäß) und der hoch entwickelten Implementierung ist eine Vielzahl an Mischformen implementierbar.

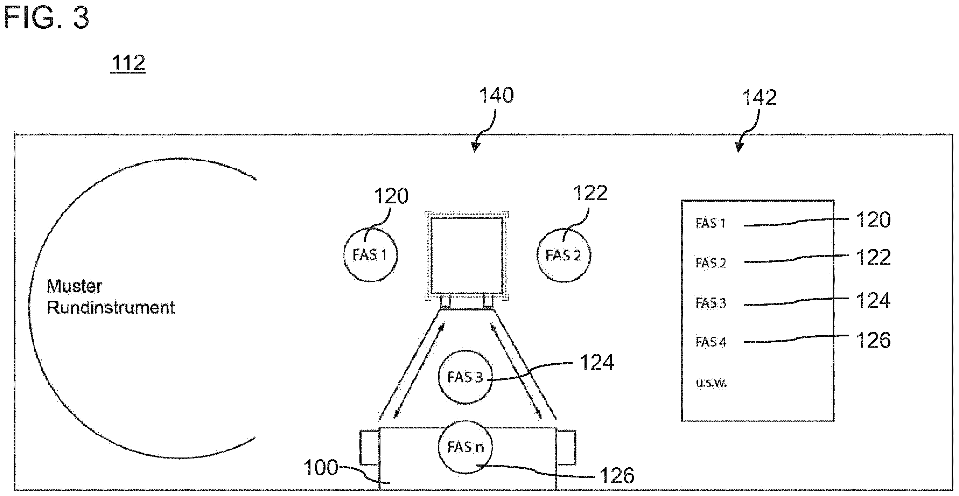

Figur 3 zeigt schematisch eine Ausgabe der Anzeigeeinheit 112 in einer ersten Implementierung (nicht erfindungsgemäß) der Vorrichtung 110, beispielsweise an einem frei programmierbaren Kombinationsinstrument (FBK). Die Anzeigeeinheit 112 zeigt verschiedene Umgebungsbereiche des Kraftfahrzeugs 100, die jeweils von mindestens einer der Regelungen 120 bis 126 des Fahrerassistenzsystems erfasst werden, in einer zusammengefassten Anzeige an. Diese Umgebungsbereiche können auch als Wirkungsbereiche des Fahrerassistenzsystems (oder kurz: Bereiche) bezeichnet werden.

Die Regelungen (beispielsweise die Reglungen 120 bis 126) sind ihren jeweiligen Bereichen zugeordnet, oder die Regelungen werden auf ihren jeweiligen Bereich abgebildet. Mittels der Eingabeeinheit 114 können die Bereiche bzw. Regelungen 120 bis 126 konfiguriert werden, beispielsweise durch Auswahl eines der angezeigten Bereiche oder Regelungen 120 bis 126. Betrifft die Veränderung des Parameters für einen Bereich mittels der Eingabeeinheit 114 mehrere Regelungen, werden alle dem Bereich zugeordneten Regelungen dem veränderten Parameter entsprechend durch die Steuereinheit 112 konfiguriert.

Die dabei eingesetzte Anzeige der Anzeigeeinheit 112 kann eine grafische Anzeige 140 und/oder eine schriftliche oder textbasierte Anzeige 142 umfassen. Die grafische Anzeige 140 kann eine symbolische Darstellung des Kraftfahrzeugs 100 und/oder eines vorausfahrenden Fahrzeugs umfassen, um die Bereiche der Fahrzeugumgebung, für welche die einzelnen Regelungen 120 bis 126 zuständig sind (gemäß der Zuordnung), relativ zum Kraftfahrzeug 100 grafisch zu bestimmen.

Die jeweiligen Bereiche oder Regelungen 120 bis 126 können durch Gestensteuerung oder Funktionstasten der Eingabeeinheit 114 ausgewählt werden. Der mittels der Vorrichtung 110 angezeigte und veränderte Parameter umfasst beispielsweise einen Status (insbesondere einen aktivieren Status oder deaktivierten Status) des Fahrerassistenzsystems für den jeweils angezeigten oder ausgewählten Bereich. Falls mehrere der Regelungen für den jeweiligen Bereich zuständig sind, wird deren Parameter (beispielsweise deren Status) gemeinschaftlich mittels der Anzeigeeinheit 112 angezeigt und gemeinschaftlich mittels der Eingabeeinheit 114 verändert (beispielsweise aktiviert beziehungsweise deaktiviert). Beispielsweise können die querregelnden (oder die die Querregelung betreffenden) Teilassistenzsysteme in unterschiedlichen Ausprägungen eingreifen oder warnen. So kann zum Beispiel das Fahrerassistenzsystem in einer ersten Stufe nur die Funktion einer Spurüberwachung ("Lane Guard") umfassen (als erstes Teilassistenzsystem), also warnen, wenn die Spur verlassen wird. In einer zweiten Stufe kann das Fahrerassistenzsystem eigenständig die Spur halten (als zweites Teilassistenzsystem). In einer dritten Stufe wird die Spur gewechselt, falls ein Hindernis oder ein langsameres vorausfahrendes Fahrzeug erkannt wird (als drittes Teilassistenzsystem). Diese Stufen (also die in den jeweiligen Stufen ausgeführten Teilassistenzsysteme) werden in der Anzeige auf das Umfeld des Fahrzeugs 100 abgebildet gemäß der Zuordnung. Nah am Kraftfahrzeug 100 ist die Regelung 124 der Spurhaltung ("FAS 3") dargestellt. Weiter weg vom Kraftfahrzeug 100 ist die Regelung 120 des Spurwechselassistent ("FAS 1") dargestellt.

Optional wirken sich die gleichen Stufen auch auf seitliche Bereiche des Kraftfahrzeugs 100 aus. So wird beim Abbiegen in der ersten Stufe nur gewarnt, in der zweiten Stufe gebremst falls ein Hindernis erkannt wird und in der dritten Stufe selbstständig weitergefahren, sobald das Hindernis nicht mehr vorhanden ist.

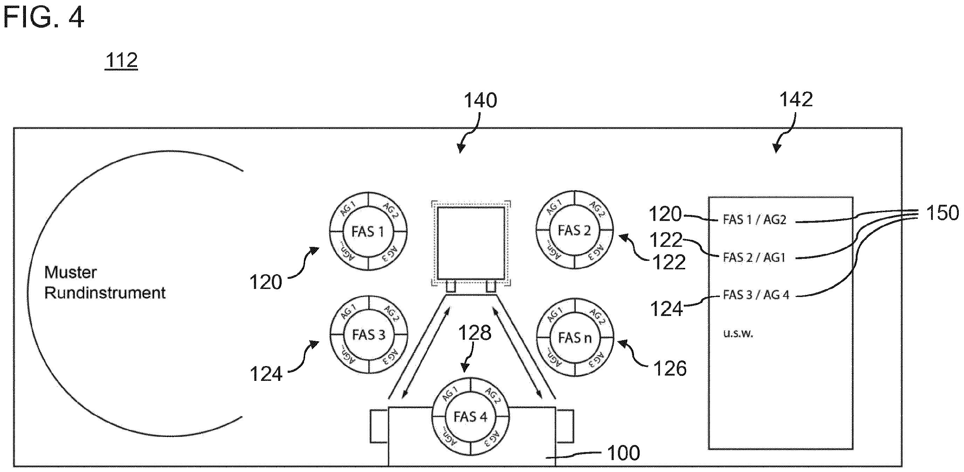

Figur 4 zeigt schematisch die Anzeigeeinheit 112 der Vorrichtung 110 gemäß einer zweiten Implementierung (gemäß der Erfindung). Die zweite Implementierung kann als eine Weiterbildung der ersten Implementierung ausgeführt sein. Austauschbare oder übereinstimmende Merkmale der Implementierungen sind mit gleichen Bezugszeichen versehen.

Bei der zweiten Implementierung umfasst der Parameter einen Autonomiegrad (AG) 150 in Zuordnung zum jeweiligen Bereich oder der jeweiligen Regelung 120 bis 126.

In einer grafischen Anzeige 140 kann der jeweilige Bereich oder die jeweilige Regelung 120 bis 126 durch einen Kreis dargestellt sein, wobei der Autonomiegrad umlaufend am Umfang des Kreises angezeigt und mittels der Eingabeeinheit 114 verschiedene Autonomiegrade auswählbar sind. Alternativ oder ergänzend ist in einer schriftlichen oder textbasierten Anzeige 142 der Autonomiegrad 150 auf einer Höhe neben dem jeweiligen Bereich oder der jeweiligen Regelung 120 bis 124 angezeigt und veränderbar. Beispielsweise umfasst der Autonomiegrad 150 diskrete Stufen, die den Funktionsumfang des Fahrerassistenzsystems für den jeweiligen Bereich und/oder der für den jeweiligen Bereich zuständigen Regelungen 120 bis 128 bestimmt.

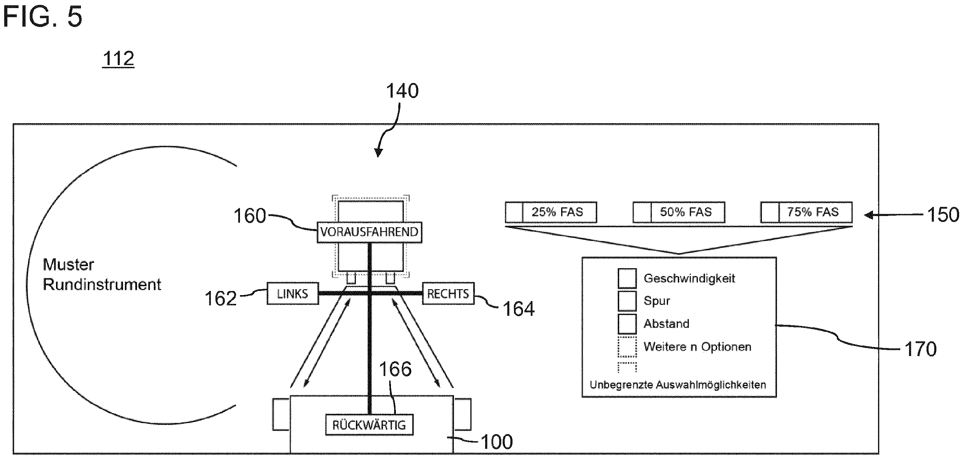

Figur 5 zeigt schematisch die Anzeigeeinheit 112 der Vorrichtung 110 gemäß einer dritten Implementierung (gemäß der Erfindung.) Mittels der Anzeigeeinheit 112 und der Eingabeeinheit 114 sind verschiedene Wirkungsbereiche 160, 162, 164 und 166 (kurz: Bereiche) des Fahrerassistenzsystems auswählbar. So kann der Parameter Bereichs-spezifisch angezeigt und/oder verändert werden. Hierzu ist (beispielsweise wie vorstehend beschrieben) jedem Bereich mindestens eine Regelung zugeordnet.

Der Parameter kann den Autonomiegrad 150 bestimmen. So ist eine Auswahl von einfacher Assistenz bis zum teilautonomen Fahren unter Berücksichtigung der Wirkungsbereiche 160 bis 166 oder differenziert nach den Wirkungsbereichen 160 bis 166 ermöglicht.

Neben der grafischen Anzeige 140 der Bereiche 160 bis 166 ist eine von verschiedenen Stufen des Autonomiegrads 150 mittels der Anzeigeeinheit 112 angezeigt und mittels der Eingabeeinheit 114 veränderbar. Dabei kann der Autonomiegrad 150 als Beispiel des Parameters die Konfiguration aller für den jeweiligen Bereich 160 bis 166 (gemäß der Zuordnung) zuständigen Regelungen 120 bis 128 bestimmen.

Die in Figur 5 beispielhaft gezeigten, auswählbaren Autonomiegrade 150 können einen Prozentsatz des Funktionsumfangs des Fahrerassistenzsystems (FAS) bestimmen. Beispielsweise warnt das Fahrerassistenzsystem bei 25 % Funktionsumfang (insbesondere vor einer Unterschreitung eines Mindestabstands oder einer Überschreitung einer Höchstgeschwindigkeit), ohne dass ein automatischer Eingriff (in die Längs- und/oder Querführung) des Kraftfahrzeugs 100 erfolgt. D. h., die Signale der Sensoren 130 bis 136 werden bei 25 % Funktionsumfang verarbeitet und überwacht, wobei die steuernden Funktionalitäten der Regelungen (beispielsweise der Regelungen 120 bis 124) im Ausführungsbeispiel des Kraftfahrzeugs 100 in Figur 1 deaktiviert sind.

Bei 50 % Funktionsumfang regelt das Fahrerassistenzsystem zusätzlich (beispielsweise zur Verhinderung von Kollisionen). D. h. im Ausführungsbeispiel des Kraftfahrzeugs 100 der Figur 1 sind einzelne oder alle der Regelungen 120 bis 128 aktiv. Bei einem Funktionsumfang von 75 % übernimmt das Fahrerassistenzsystem teilautonom Aufgaben des Fahrens, beispielsweise einen Spurwechsel. D. h. bei 75 % Funktionsumfang sind die einzelnen Regelungen (beispielsweise der Regelungen 120 bis 124) im Ausführungsbeispiels des Kraftfahrzeugs 100 der Figur 1 durch ein übergeordnetes Fahrerassistenzsystem (das beispielsweise durch die Steuerungseinheit 118 implementiert ist) funktional verknüpft.

Optional kann der Autonomiegrad 150 in Kombination mit einzelnen oder mehreren Führungsgrößen 170 der Regelungen 120 bis 128 bestimmt werden. Die Führungsgrößen können Geschwindigkeit, Fahrspur, Abstand etc. umfassen.

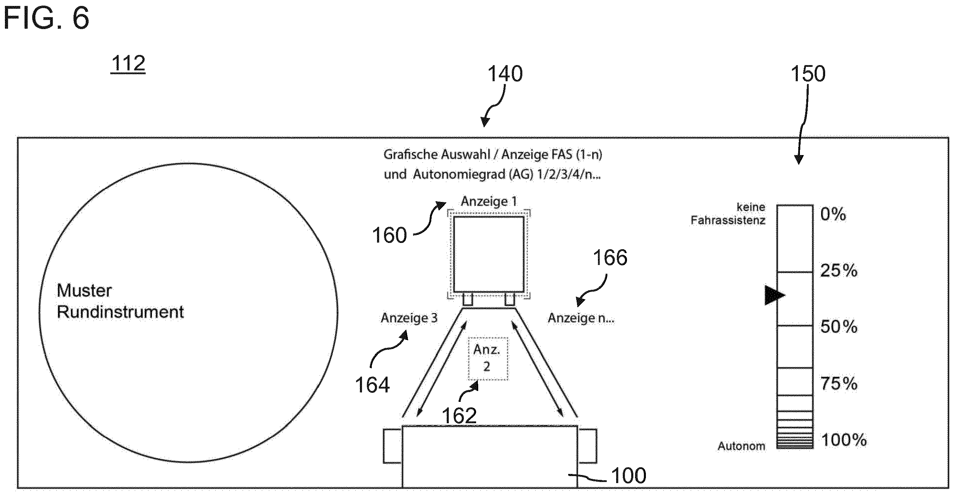

Figur 6 zeigt schematisch die Anzeigeeinheit 112 gemäß einer vierten Implementierung (gemäß der Erfindung) der Vorrichtung 110. Die vierte Implementierung ist mit jeder der vorherigen Implementierungen kombinierbar. Insbesondere kann die vierte Implementierung als Weiterbildung der dritten Implementierung ausgeführt sein, beispielsweise als die hochentwickelte Implementierung der Figur 2.

In der grafischen Anzeige 140 innerhalb der Anzeigeeinheit 112 sind die Wirkungsbereiche 160 bis 166 relativ zum Kraftfahrzeug 100 angezeigt und optional auswählbar. Neben der grafischen Anzeige 140 ist mittels der Anzeigeeinheit 112 der Autonomiegrad 150 als Beispiels des Parameters angezeigt und mittels der Eingabeeinheit 114 veränderbar. Dabei bewirkt die Steuerungseinheit 118 die Konfiguration jeder der funktional verschiedenen Regelungen 120 bis 128 des Fahrerassistenzsystems abhängig vom Autonomiegrad 150.

Der Autonomiegrad 150 kann abstrakt den Funktionsumfang für das gesamte Fahrerassistenzsystem oder die einzelnen Bereiche 160 bis 166 bestimmen. Die Auswahl des Autonomiegrads 150 mittels der Eingabeeinheit 114 erfolgt auf einem Kontinuum. Der Autonomiegrad 150 ist veränderbar von selbstbestimmtem Fahren (0 %) bis zum autonomen Fahren (100 %).

Wie anhand vorstehender Ausführungsbeispiele und Implementierungen verdeutlicht, kann die Vorrichtung 110 eine Zusammenfassung verschiedener Regelungen eines Kraftfahrzeugs (beispielsweise herkömmlicher Teilassistenzsysteme) zu einem übergreifenden Fahrerassistenzsystem ermöglichen. Insbesondere können eine einheitliche Anzeige und Bedienung vielfältiger Funktionen und deren Abstufungen mittels der Vorrichtung 110 realisiert sein.

Die Vorrichtung 110 kann einheitlich implementiert werden in verschiedenen Kraftfahrzeugen mit unterschiedlichem Ausstattungsgrad hinsichtlich der Fahrzeugsensoren und/oder Regelungen, so dass für einen Fahrer beim Fahrzeugwechsel eine bekannte Bedienlogik ohne zusätzlichen Lernaufwand vorliegt. Beispielsweise wird fahrzeugspezifisch der maximale Autonomiegrad 150 begrenzt.

Durch die Vorrichtung 110 zur Konfiguration eines Fahrerassistenzsystems ist eine Grenzsetzung zwischen herkömmlichen Teilassistenzsysteme (die beispielsweise auf historisch gewachsenen technischen Entwicklungen beruhen) oder zwischen Regelungen (die beispielsweise jeweils auf technisch unterschiedlichen Regelkreisen beruhen) durch die Vorrichtung aufgehoben, beispielsweise indem eine neue Grenzsetzung nach Szenarien und/oder Wirkungsbereichen erfolgt und daher für den Fahrer besser nachvollziehbar ist. Die Vorrichtung ermöglicht somit eine intuitive, leicht erlernbare Bedienung eines einzelnen, kompakten Fahrerassistenzsystems, beispielsweise mittels einer durchgängigen Bedienlogik innerhalb des Fahrerassistenzsystems.

Die Eingabeeinheit kann generische Bedienelemente (beispielsweise mit Auswahlfunktion und/oder Bestätigungsfunktion) umfassen. Dadurch können Tasten und Menüebenen eingespart werden. Zudem kann das Fahrerassistenzsystem durch die Bedienung mittels der einheitlichen Anzeigeeinheit und einheitlichen Eingabeeinheit dem Fahrer als Einheit präsentiert werden.

Die Vorrichtung ermöglicht sowohl dem Fahrzeughersteller als auch dem Fahrer einen kontinuierlichen Übergang vom einfachen Assistenzsystem bis zum Autopiloten des Kraftfahrzeugs. Insbesondere ermöglicht die Vorrichtung Aktualisierungen des Fahrerassistenzsystems (beispielsweise der Regelungen und/oder der Steuerungseinheit) oder die Integration zusätzlicher Konfigurationsmöglichkeiten, beispielsweise durch Austausch der Steuerungssoftware in der Steuerungseinheit.

Obwohl die Erfindung unter Bezugnahme auf bestimmte Ausführungsbeispiele beschrieben worden ist, ist es für den Fachmann ersichtlich, dass verschiedene Änderungen vorgenommen werden können, die unter den Schutzbereich der beigefügten Ansprüche fallen. Ferner können viele Modifikationen vorgenommen werden, um eine bestimmte Situation und/oder einen bestimmten Funktionsumfang an die Lehre der Erfindung (im Rahmen des Schutzbereichs der beigefügten Ansprüche) anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Kraftfahrzeug
- 110: Vorrichtung zur Konfiguration eines Fahrerassistenzsystems
- 112: Anzeigeeinheit
- 114: Eingabeeinheit
- 116: Multifunktionstasten
- 118: Steuerungseinheit
- 120, 122, 124, 126, 128: Regelungen des Fahrerassistenzsystems
- 121: Bremse
- 123: Antrieb
- 125: Lenkung
- 130: Radarsensor
- 132: Stereokamera
- 134: Seitenkamera
- 136: Ultraschallsensor
- 140: Grafische Anzeige
- 142: Textbasierte Anzeige
- 150: Autonomiegrad
- 160 - 166: Wirkungsbereiche des Fahrerassistenzsystems
- 170: Führungsgrößen des Fahrerassistenzsystems

## Patentansprüche

1. Vorrichtung (110) zur Konfiguration eines Fahrerassistenzsystems eines Kraftfahrzeugs (100), umfassend:
eine Anzeigeeinheit (112) zur Anzeige eines Parameters (150) des Fahrerassistenzsystems und eine Eingabeeinheit (114; 116) zur Veränderung des angezeigten Parameters (150); und
eine Steuerungseinheit (118), die dazu ausgebildet ist, abhängig von dem Parameter (150) mehrere funktional verschiedene Regelungen (120-128) des Fahrerassistenzsystems zu konfigurieren, wobei
der Parameter (150) einen Funktionsumfang der funktional verschiedenen Regelungen (120-128) und/oder einen Funktionsumfang der funktional verschiedenen Regelungen (120-128) für einen Umgebungsbereich (160-166) relativ zum Kraftfahrzeug (100) bestimmt,
**dadurch gekennzeichnet, dass**
(a) der Parameter (150) einen Autonomiegrad (150) in Zuordnung zum jeweiligen Umgebungsbereich oder zu der jeweiligen Regelung (120-126) umfasst,
wobei in einer grafischen Anzeige (140) der jeweilige Umgebungsbereich oder die jeweilige Regelung (120-126) durch einen Kreis dargestellt ist und der Autonomiegrad (150) umlaufend am Umfang des Kreises angezeigt und mittels der Eingabeeinheit (114) verschiedene Autonomiegrade (150) auswählbar sind, und/oder
wobei in einer schriftlichen oder textbasierten Anzeige (142) der Autonomiegrad (150) auf einer Höhe neben dem jeweiligen Umgebungsbereich oder der jeweiligen Regelung (120-124) angezeigt und veränderbar ist, und/oder
(b) der Parameter (150) den Autonomiegrad (150) bestimmt, wobei neben einer grafischen Anzeige (140) der Umgebungsbereiche (160-166) eine von verschiedenen Stufen des Autonomiegrads (150) mittels der Anzeigeeinheit (112) angezeigt und mittels der Eingabeeinheit (114) veränderbar ist.

2. Vorrichtung nach Anspruch 1, wobei die Anzeigeeinheit (112) ein Kombinationsinstrument umfasst.

3. Vorrichtung nach Anspruch 1 oder 2, wobei die Eingabeeinheit (114; 116) ein Multifunktionslenkrad umfasst.

4. Vorrichtung nach einem der Ansprüche 1 bis 3, wobei die funktional verschiedenen Regelungen (120-128) eine Längsregelung und eine Querregelung des Kraftfahrzeugs (100) umfassen.

5. Vorrichtung nach einem der Ansprüche 1 bis 4, wobei die funktional verschiedenen Regelungen (120-128) eine Abstands- und Geschwindigkeitsregelung und eine Lenkregelung umfassen.

6. Vorrichtung nach einem der vorhergehenden Ansprüche, wobei die Steuereinheit (118) aufgrund des Parameters (150) die Aktivierung und/oder den Funktionsumfang aller funktional verschiedenen Regelungen (120-128) konfiguriert, soweit die Regelungen den jeweiligen Umgebungsbereich (160-166) betreffen.

7. Vorrichtung nach einem der vorhergehenden Ansprüche, wobei mehrere Parameter angezeigt und einstellbar sind, jeder Parameter einem von mehreren Umgebungsbereichen (160-166) relativ zum Kraftfahrzeug (100) zugeordnet ist.

8. Vorrichtung nach Anspruch 7, wobei jeder Parameter in räumlicher Zuordnung zum zugeordneten Umgebungsbereich angezeigt ist.

9. Vorrichtung nach einem der Ansprüche 6 bis 8, wobei jedem Umgebungsbereich (160-166) mindestens eine der Regelungen (120-128) zugeordnet ist, und/oder mindestens einer der Regelungen (120-128) zwei oder mehr Umgebungsbereiche (160-166) zugeordnet sind.

10. Vorrichtung nach einem der vorhergehenden Ansprüche , wobei die Steuerungseinheit (118) in einem ersten Intervall des Parameters eine erste der Regelungen (120-128) aktiviert und in einem vom ersten Intervall disjunkten zweiten Intervall des Parameters eine von der ersten Regelung verschiedene zweite Regelung der Regelungen (120-128) aktiviert.

11. Vorrichtung nach Anspruch 10, wobei die Steuerungseinheit (118) das Fahrerassistenzsystem konfiguriert bei Feststellung einer vorbestimmten Verkehrssituation, bei deaktivierter Regelung nur eine Warnung auszugeben, bei Aktivierung der ersten Regelung einzugreifen und bei Aktivierung der zweiten Regelung die Verkehrssituation selbstständig aufzulösen.

12. Kraftfahrzeug (100), insbesondere ein Nutzfahrzeug, umfassend eine Vorrichtung (110) gemäß einem der Ansprüche 1 bis 11.

## Claims

1. A configuration device (110) for a driver assistance system of a motor vehicle (100), comprising:
a display unit (112) for displaying a parameter (150) of the driver assistance system and an input unit (114; 116) for changing the displayed parameter (150); and
a control unit (118), which is designed to configure, dependent on the parameter (150), a number of functionally different controls (120-128) of the driver assistance system, wherein
the parameter (150) determines a functional scope of the functionally different controls (120-128) and/or a functional scope of the functionally different controls (120-128) for a surrounding area (160-166) in relation to the motor vehicle (100),
**characterized in that**
(a) the parameter (150) comprises a degree of autonomy (150) in assignment to the respective surrounding area or to the respective control (120-126),
wherein the respective surrounding area or the respective control (120-126) is represented in the graphic display (140) by a circle and the degree of autonomy (150) is indicated peripherally around the circumference of the circle and various degrees of autonomy (150) can be selected by means of the input unit (114), and/or
wherein the degree of autonomy (150) is indicated in a written or text-based display (142) level with and alongside the respective surrounding area or the respective control (120-124) and can be changed, and/or
(b) the parameter (150) determines the degree of autonomy (150), wherein, in addition to a graphic display (140) of the surrounding areas (160-166), one of various stages of the degree of autonomy (150) is indicated by means of the display unit (112) and can be changed by means of the input unit (114).

2. The device according to Claim 1, wherein the display unit (112) comprises an instrument cluster.

3. The device according to Claim 1 or 2, wherein the input unit (114; 116) comprises a multifunctional steering wheel.

4. The device according to one of Claims 1 to 3, wherein the functionally different controls (120-128) comprise a longitudinal control and a lateral control of the motor vehicle (100).

5. The device according to one of Claims 1 to 4, wherein the functionally different controls (120-128) comprise a cruise control and a steering control.

6. The device according to one of the preceding claims, wherein the control unit (118) configures the activation and/or the functional scope of all of the functionally different controls (120-128) on the basis of the parameter (150), to the extent to which the controls concern the respective surrounding area (160-166).

7. The device according to one of the preceding claims, wherein a number of parameters are displayed and can be set, each parameter being assigned to one or more surrounding areas (160-166) in relation to the motor vehicle (100).

8. The device according to Claim 7, wherein each parameter is displayed in spatial assignment to the assigned surrounding area.

9. The device according to one of Claims 6 to 8, wherein each surrounding area (160-166) is assigned at least one of the controls (120-128), and/or at least one of the controls (120-128) is assigned two or more surrounding areas (160-166).

10. The device according to one of the preceding claims, wherein the control unit (118) activates a first of the controls (120-128) in a first interval of the parameter and a second control of the controls (120-128), different from the first control, in a second interval of the parameter that is disjunct from the first interval.

11. The device according to Claim 10, wherein, when a predetermined traffic situation is detected, the control unit (118) configures the driver assistance system only to issue a warning if the control is deactivated, to intervene if the first control is activated and to resolve the traffic situation independently if the second control is activated.

12. A motor vehicle (100), in particular a commercial vehicle, comprising a device (110) according to one of Claims 1 to 11.

## Revendications

1. Dispositif (110) permettant de configurer un système d'assistance au conducteur d'un véhicule automobile (100), comprenant :
une unité d'affichage (112) permettant d'afficher un paramètre (150) du système d'assistance au conducteur, et une unité d'entrée (114 ; 116) pour modifier le paramètre affiché (150) ; et
une unité de commande (118) qui est réalisée pour configurer, en fonction du paramètre (150), plusieurs réglages différents du point de vue fonctionnel (120 à 128) du système d'assistance au conducteur, dans lequel
le paramètre (150) détermine les fonctionnalités des réglages différents du point de vue fonctionnel (120 à 128) et/ou les fonctionnalités des réglages différents du point de vue fonctionnel (120 à 128) pour une zone environnante (160 à 166) par rapport au véhicule automobile (100),
**caractérisé en ce que**
(a) le paramètre (150) comprend un degré d'autonomie (150) associé à la zone environnante respective ou à un réglage respectif (120 à 126),
dans lequel, sur un affichage graphique (140), la zone environnante respective ou le réglage respectif (120 à 126) est représenté(e) par un cercle, et le degré d'autonomie (150) est affiché en périphérie sur la circonférence du cercle, et différents degrés d'autonomie (150) peuvent être sélectionnés au moyen de l'unité d'entrée (114), et/ou
dans lequel, sur un affichage écrit ou textuel (142), le degré d'autonomie (150) peut être affiché et modifié à un niveau à côté de la zone environnante respective ou du réglage respectif (120 à 124), et/ou
(b) le paramètre (150) détermine le degré d'autonomie (150), dans lequel, à côté d'un affichage graphique (140) des zones environnantes (160 à 166), l'un de différents niveaux du degré d'autonomie (150) est affiché au moyen de l'unité d'affichage (112) et peut être modifié au moyen de l'unité d'entrée (114).

2. Dispositif selon la revendication 1, dans lequel l'unité d'affichage (112) comprend un combiné d'instruments.

3. Dispositif selon la revendication 1 ou 2, dans lequel l'unité d'entrée (114 ; 116) comprend un volant multifonctions.

4. Dispositif selon l'une quelconque des revendications 1 à 3, dans lequel les réglages différents du point de vue fonctionnel (120 à 128) comprennent un réglage longitudinal et un réglage transversal du véhicule automobile (100).

5. Dispositif selon l'une quelconque des revendications 1 à 4, dans lequel les réglages différents du point de vue fonctionnel (120 à 128) comprennent un réglage de la distance et de la vitesse et un réglage de la direction.

6. Dispositif selon l'une quelconque des revendications précédentes, dans lequel l'unité de commande (118) configure sur la base du paramètre (150) l'activation et/ou les fonctionnalités de tous les réglages différents du point de vue fonctionnel (120 à 128) dans la mesure où les réglages concernent la zone environnante respective (160 à 166).

7. Dispositif selon l'une quelconque des revendications précédentes, dans lequel plusieurs paramètres sont affichés et réglables, chaque paramètre étant associé à l'une de plusieurs zones environnantes (160 à 166) par rapport au véhicule automobile (100).

8. Dispositif selon la revendication 7, dans lequel chaque paramètre est affiché en association spatiale avec la zone environnante associée.

9. Dispositif selon l'une quelconque des revendications 6 à 8, dans lequel chaque zone environnante (160 à 166) est associée à au moins l'un des réglages (120 à 128), et/ou au moins l'un des réglages (120 à 128) est associé à deux ou plusieurs zones environnantes (160 à 166).

10. Dispositif selon l'une quelconque des revendications précédentes, dans lequel l'unité de commande (118) active dans un premier intervalle du paramètre un premier des réglages (120 à 128) et active dans un deuxième intervalle du paramètre, distinct du premier intervalle, un deuxième réglage des réglages (120 à 128), différent du premier réglage.

11. Dispositif selon la revendication 10, dans lequel l'unité de commande (118) du système d'assistance au conducteur est configurée, si une situation de trafic prédéterminée est constatée, pour n'émettre qu'un avertissement si le réglage est désactivé, pour intervenir si le premier réglage est activé, et pour résoudre de manière autonome la situation de trafic si le deuxième réglage est activé.

12. Véhicule automobile (100), en particulier véhicule utilitaire, comprenant un dispositif (110) selon l'une quelconque des revendications 1 à 11.
